# FASCICULE DE BREVET EUROPEEN

(11) **EP 2 492 131 B1**
(45) Date de publication et mention de la délivrance du brevet: **06.06.2018**
(21) Numéro de dépôt: 12150036.7
(22) Date de dépôt: 03.01.2012
(51) Int. Cl.: B60K 37/06, H04M 1/60

(54) **Equipement multimédia et de téléphonie mains-libres pour véhicule automobile**
Multimedia-Ausstattung und Telefonfreisprechanlage für Kraftfahrzeug
Multimedia and hands-free telephony device for an automobile

(30) Priorité: 04.01.2011 FR 1150055
(43) Date de publication de la demande: 29.08.2012
(73) Titulaire: PARROT AUTOMOTIVE, 75010 Paris (FR)
(72) Inventeur: Borges Valera, Simão, 93400 Saint-Ouen (FR); Loizeau, Antoine, 75014 Paris (FR)
(74) Mandataire: Dupuis-Latour, Dominique

(56) Documents cités:
- WO-A2-2009/073806
- FR-A1- 2 878 394
- US-A1- 2010 305 807

## Description

L'invention concerne les équipements électroniques utilisés à bord des véhicules automobiles et susceptibles d'être, entre autres, couplés à un téléphone portable de manière à assurer un fonctionnement "mains-libres" de ce dernier.

Elle concerne plus particulièrement les équipements destinés à être installés en "seconde monte" sur un véhicule et qui ne sont donc pas intégrés à ce dernier d'origine.

L'équipement est ajouté au véhicule pour pouvoir disposer de fonctionnalités qui n'existaient pas à l'origine ; il peut également s'agir de remplacer un équipement existant par un autre présentant des fonctionnalités plus étendues, ou plus performant et polyvalent.

Le FR 2 878 394 A1 (Parrot) décrit un tel équipement comportant deux boîtiers distincts, dénommés "boîtier numérique" et "boîtier analogique". Le boîtier numérique est disposé à portée de main du conducteur, il comprend des boutons de commande (décrochage/raccrochage, commande du volume, etc.) et incorpore un microcontrôleur et un microphone pour la conversation téléphonique mains-libres et la reconnaissance vocale. Le boîtier analogique, de son côté, est dans une prise allume-cigare du véhicule, et inclut un régulateur de tension, un amplificateur audio et un haut-parleur intégré. Les deux boîtiers sont reliés par un câble multiconducteur comprenant une ligne de signal audio, une ligne d'alimentation électrique une ligne *mute* de désactivation de l'amplificateur audio utilisée par exemple lorsqu'aucun téléphone n'est détecté dans l'environnement de l'adaptateur, et éventuellement un fil pilote pour le retour, vers le circuit d'alimentation situé dans le boîtier analogique, de la rétroaction du régulateur de tension de boîtier numérique afin de compenser les pertes de charge dans le câble de liaison.

En outre, il s'agit d'un équipement simple de type *plug-and-play* (prêt à brancher), enfichable sur la prise allume-cigare mais qui ne peut être connecté à d'autres organes du véhicule, notamment l'installation audio (haut-parleurs répartis dans le véhicule, radio, lecteur CD, etc.).

L'arrivée de nouvelles générations d'équipements intégrant un nombre de plus en plus grand de fonctionnalités et de contrôles conduit toutefois à des difficultés de mise en oeuvre d'un équipement réalisé selon ce principe.

En effet, les équipements de nouvelle génération intègrent généralement la possibilité de coupler l'amplificateur audio à un appareil de reproduction tel qu'un baladeur, ou encore à un support de stockage de données audio tel qu'une "clef USB" ou une carte *SD card* ou autre. Il est alors nécessaire de mettre à disposition de l'utilisateur des commandes de navigation de type morceau suivant/morceau précédent, piste suivante/piste précédente, etc. (les "pistes" correspondant à des répertoires différents du support dans lesquels sont stockés les divers fichiers correspondant aux "morceaux" de musique).

En second lieu, de plus en plus de véhicules sont équipés en série, donc en première monte, de touches de commande au volant, et il est indispensable de pouvoir proposer à l'utilisateur de commander l'équipement installé en seconde monte au moyen de ces touches (augmentation/diminution du volume, choix de la source audio, morceau suivant/morceau précédent, etc.).

Ces évolutions conduisent à une multiplication des liaisons filaires entre les deux boîtiers, avec typiquement :
- deux fils d'alimentation électrique,
- quatre fils pour l'audio (deux pour l'audio entrant, deux pour l'audio sortant),
- un faisceau de fils correspondant aux diverses touches respectives de commande au volant,
- plus divers fils pour la gestion de fonctions générales telle que la détection de la position de la clef de contact du véhicule, de l'allumage du système d'éclairage, etc.

Ces exigences conduisent à une augmentation importante du diamètre et de la rigidité du câble reliant les deux boîtiers, qui devient incompatible avec une installation satisfaisante. Ceci d'autant plus que le boîtier numérique est en principe conçu pour être amovible, et doit donc pouvoir être aisément déconnecté. En outre, dans sa partie visible sortant de la planche de bord, le câble de gros diamètre donne une impression plutôt négative du produit sur le plan esthétique.

Enfin, le passage d'une multiplicité de fils dans un même câble entraîne un risque élevé de dégrader la qualité de la liaison audio en la bruitant, sauf à utiliser des fils blindés, ce qui augmenterait encore l'encombrement et le coût de revient du câble.

Le US010/0305807 A1 décrit un équipement comprenant un boitier central monobloc directement contrôlé par un téléphone ou un PDA (assistant numérique personnel) distant. Ce boitier intègre à la fois toute la partie "intelligente" audio/téléphonie de l'équipement autour d'un microcontrôleur de traitement des signaux, et les fonctions utilitaires telles que l'alimentation de puissance.

Le WO 2009/073806 A2 décrit la manière d'interfacer un dispositif portable tel qu'un téléphone ou PDA avec un autre dispositif incorporé au tableau de bord du véhicule, par exemple un afficheur de plus grande dimension synchronisé sur l'afficheur ou PDA, mais n'envisage pas une architecture matérielle particulière pour l'équipement, ni la manière particulière d'alimenter les différents organes de l'équipement.

Le but de l'invention est de remédier à ces difficultés et limitations, en proposant une nouvelle architecture d'équipement qui soit compatible avec une multiplication des fonctionnalités de cet équipement, tout en limitant le nombre et la taille des câbles visibles sortant de la planche de bord.

Un autre but de l'invention est d'assurer une liaison audio particulièrement robuste à l'encontre des perturbations extérieures, dont on sait qu'il est particulièrement difficile de se protéger dans l'environnement d'un véhicule automobile.

À cet effet, l'invention propose un équipement pour véhicule automobile du type général divulgué par le US010/0305807 A1 précité, correspondant au préambule de la revendication 1. La partie caractérisante de cette revendication énonce les éléments de l'invention permettant d'atteindre les buts précités.

Les sous-revendications énoncent diverses caractéristiques subsidiaires avantageuses de l'invention.

On va maintenant décrire un exemple de mise en oeuvre du dispositif de l'invention, en référence aux dessins annexés où les mêmes références numériques désignent d'une figure à l'autre des éléments fonctionnellement identiques.
La Figure 1 est une vue schématique des principaux éléments de l'équipement de l'invention.
La Figure 2 illustre, sous forme de schéma par blocs, les différents organes constitutifs de l'équipement de l'invention et des différents appareils auxquels celui-ci peut être couplé.

L'équipement de l'invention décrit sur les figures est constitué, essentiellement, d'un premier boîtier 10 dit "boîtier pilote" et d'un second boîtier 12 dit "boîtier de service", reliés par une liaison filaire de couplage 14. À ces boîtiers est adjointe une télécommande 16, couplée au boîtier pilote 10 par une liaison sans fil.

Le boîtier pilote 10 est disposé à portée immédiate du conducteur du véhicule, de manière notamment que son écran puisse être visible du conducteur et à portée de main de celui-ci. Il est par exemple monté sur la planche de bord par un système amovible comparable à celui servant à la fixation des appareils de type GPS.

Le boîtier de service 12, en revanche, est monté à demeure à distance du boîtier pilote, à un emplacement qui n'a pas besoin d'être aisément accessible, par exemple dans une boîte à gants ou sous la planche de bord du véhicule.

La télécommande 16 est montée sur le volant par un système de fixation approprié, ou sur un support collé sur la planche de bord à portée de main du conducteur. Cette télécommande 16 permet l'envoi d'ordres tels que : décrochage/raccrochage (pour les fonctions de téléphonie), choix de la source, augmentation/diminution du volume sonore, et navigation dans une liste de morceaux musicaux (morceau suivant/morceau précédent, plage suivante/plage précédente, avance rapide/retour rapide).

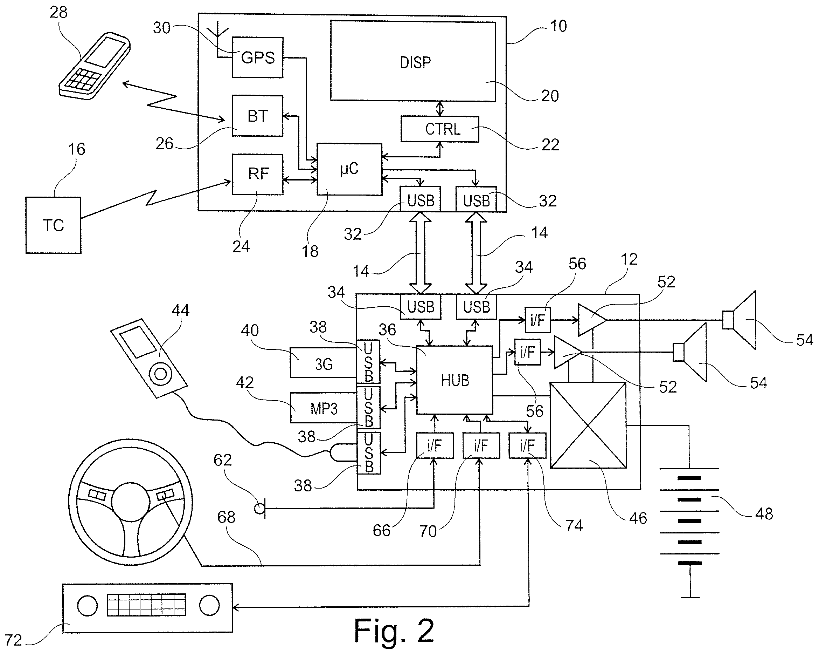

Comme illustré Figure 2, le boîtier pilote 10 incorpore un processeur numérique 18 polyvalent permettant de traiter les signaux et de piloter l'ensemble de l'équipement. On peut par exemple utiliser un microcontrôleur de type OMAP (*Open Multimedia Application Platform,* plateforme ouverte pour applications multimédia) tel que le *OMAP 3630* développé par Texas Instruments, qui permet de piloter et programmer de multiples fonctionnalités de gestion des flux audio et les algorithmes de traitement audio de la musique et de la voix (pour la téléphonie) avec reconnaissance vocale, débruitage, anti-écho, etc., ainsi que les algorithmes de gestion des données issues de la télécommande.

Le boîtier pilote comporte également un écran d'affichage 20, avantageusement une dalle avec une interface tactile permettant en outre l'entrée de commandes par l'utilisateur. L'afficheur 20 est couplé au processeur 18 par un contrôleur de dalle tactile 22.

Le microcontrôleur 18 est également couplé à un récepteur radiofréquence 24 qui reçoit les données de la télécommande distante 16, par exemple sur la bande de fréquences des 433 MHz.

Le microcontrôleur 18 est également couplé à un circuit 26 permettant de gérer une liaison sans fil bidirectionnelle avec un téléphone portable 28 conformément aux spécifications *Bluetooth* (marque déposée du Bluetooth SIG, Inc.) et de piloter à distance toutes les fonctions de ce téléphone : décrochage, raccrochage, numérotation, navigation dans les menus, sélection dans un répertoire, etc.

Avantageusement, le microcontrôleur 18 est également couplé à un module récepteur GPS 30 permettant de gérer et de présenter sur l'afficheur 20 des informations de géopositionnement par satellite.

Enfin, le microcontrôleur 18 est couplé à au moins une interface USB 32 permettant d'assurer la liaison avec le boîtier de service 12 via un couplage filaire numérique bidirectionnel (bus USB conventionnel). Dans l'exemple illustré, le couplage est assuré par deux bus de liaison utilisés en parallèle en raison du volume important de signaux à échanger entre le boîtier pilote 10 et le boîtier de service 12, mais si ce volume est moindre il est possible de transférer l'ensemble des signaux sur une unique liaison bidirectionnelle USB.

On notera que le boîtier pilote 10 est dépourvu d'alimentation propre et que, d'autre part, sa connectique est réduite au minimum, à savoir la ou les interface(s) USB 32. En revanche, c'est ce boîtier pilote 10 qui intègre toute l'intelligence du produit dans la mesure où, comme on le verra, le boîtier de service 12 ne comporte pas de circuit de traitement numérique (pas de microcontrôleur).

Le boîtier de service 12 est en effet essentiellement dédié à la gestion de l'alimentation de l'équipement et à la mise à disposition d'une connectique enrichie ; il incorpore en outre les étages audio analogiques d'amplification de puissance du système audio du véhicule.

Le boîtier de service 12 comprend au moins un port USB 34 (dans l'exemple illustré, deux ports USB 34) pour la liaison de couplage 14 avec le boîtier pilote 10. Ce(s) port(s) USB 34 est(sont) dupliqué(s) par un répartiteur ou *hub* USB 36, de manière à disposer sur le boîtier de service 12 d'une pluralité de prises USB supplémentaires 38 permettant le branchement, par exemple :
- d'une "clef 3G" assurant un accès internet sans fil à des sites spécialisés, par exemple pour l'accès à un service de radio Internet en *streaming* (diffusion en flux continu) ou à un service de musique à la demande ;
- d'un support de données, par exemple une "clef USB" 42 contenant des fichiers musicaux comprimés (MP3 ou autres) regroupés dans divers répertoires ; et/ou
- d'un baladeur audio 44, connecté au boîtier de service par une prise USB et contenant également des fichiers audio stockés dans divers répertoires.

Le boîtier de service 12 inclut par ailleurs un module d'alimentation électrique 46 relié au réseau de bord du véhicule (batterie et alternateur) et pourvu des fonctions habituelles de régulation et de stabilisation de tension, antiparasitage, etc. Ce module d'alimentation 46 délivre au répartiteur 36 une tension régulée permettant d'alimenter indirectement, via la(les) liaison(s) USB 14, le module pilote 10 qui est dépourvu de moyen d'alimentation propre. On notera que l'alimentation peut être délivrée de cette manière à l'ensemble des appareils branchés sur la connectique du boîtier de service, par exemple à la clef 3G 40 pour la faire fonctionner, au baladeur 44 pour le faire fonctionner et le recharger, etc. Le module 46 alimente également, directement, les divers circuits présents dans le boîtier de service 12.

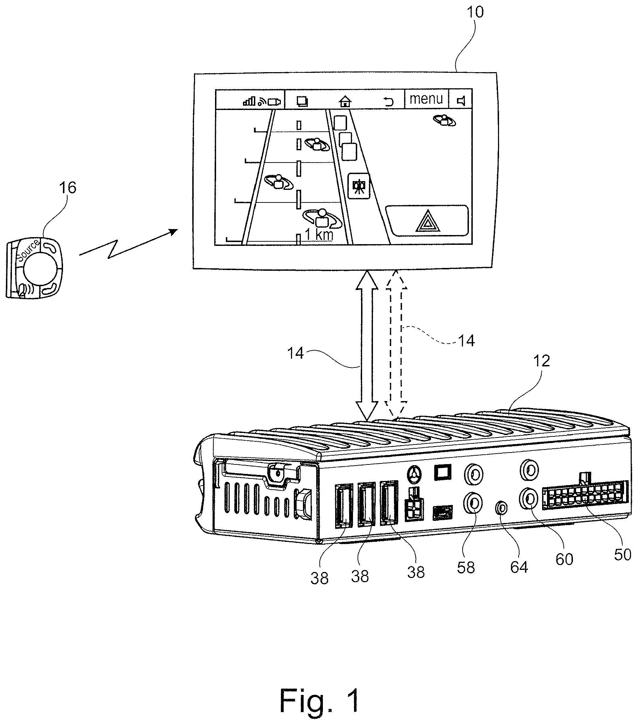

Le raccordement du module d'alimentation 46 au circuit de bord se fait par l'intermédiaire d'une prise 50 (Figure 1) recevant un connecteur approprié relié à un faisceau de fils normalisés (connectique ISO automobile) desservant les divers éléments montés à demeure dans le véhicule : réseau d'alimentation, haut-parleurs, touches de commande au volant, autoradio, etc.

Le boîtier de service 12 incorpore également des circuits de puissance audio, notamment les amplificateurs BF de puissance 52 destinés à être reliés, via la prise 50, à des haut-parleurs respectifs 54 installés à demeure dans le véhicule. Ces amplificateurs 52 reçoivent en entrée un signal analogique issu du bus USB et délivré par des interfaces 56 (codecs audio).

Les signaux audio analogiques non amplifiés peuvent être également accédés par des bornes *line in* d'entrée ligne 58 et *line out* de sortie ligne 60 (Figure 1) accessibles sur la face extérieure du boîtier de service 12.

Le boîtier de service 12 est également relié à un microphone 62 monté en un emplacement approprié du véhicule, branché sur une prise 64 (Figure 1) du boîtier de service et couplé au bus 14 de couplage au boîtier pilote 10 via une interface USB 66 (codec audio) et le répartiteur 36. Le boîtier de service 12 est également relié à une liaison 68 menant à des boutons de commande intégrés au volant du véhicule. Cette liaison est couplée au bus 14 de couplage au boîtier pilote 10 via la prise normalisée 50, une interface USB 70 (interface GPIO de gestion d'entrées/sorties), et le répartiteur 36.

Enfin, le boîtier pilote 10 peut être éventuellement relié à un autoradio 72 ou autre dispositif audio/vidéo, via l'interface USB 74 et la prise normalisée 50.

De cette manière, les périphériques qui sont couplés à l'équipement (haut-parleurs 54, clef 3G 40, clef USB 42, baladeur 44, microphone 62, commandes au volant 68 et autoradio 72) le sont tous par l'intermédiaire de la connectique du boîtier de service 12, qui assure en outre un couplage commun de l'ensemble de ces périphériques au boîtier pilote 10 via le bus numérique USB 14.

Le boîtier pilote 10 n'est ainsi pourvu, comme connectique, que de la (ou des) prise(s) USB 32 de liaison au bus 14, et ne laisse donc apparent qu'un seul (ou deux) câbles USB, qui peut être aisément dissimulés et ne présente pas d'inconvénient sur le plan esthétique.

De plus, cette simplification de la connectique filaire au niveau du boîtier pilote 10 facilite le débranchement et l'enlèvement de ce boîtier, opérations fréquentes car il n'est pas souhaitable de le laisser en place quand le véhicule est laissé stationné pour une longue durée.

Le boîtier pilote 10 permet de commander directement, par l'intermédiaire de l'écran tactile 20 ou bien par la télécommande 16, une multiplicité de fonctions telles que :
- utilisation "mains-libres" du téléphone : émission et réception d'appels, synchronisation du répertoire, pilotage par commandes vocales (captées par le micro 62), etc.
- reproduction de la musique depuis :
   - la clef USB 42, avec accès au détail du contenu de celle-ci et navigation dans les divers répertoires où sont stockés les fichiers musicaux,
   - le baladeur 44, avec de la même façon accès au détail du contenu et navigation dans les répertoires,
   - l'entrée auxiliaire 58,
   - un service de radio internet via la clef 3G 40,
   - un service de musique à la demande, également via la clef 3G, etc.,
- de façon générale, accès à tout type de service nécessitant une connexion internet,
- assistance à la conduite par le récepteur de navigation GPS 30.

La liaison par le bus USB 14 permet de faire circuler les signaux audio dans les deux sens, de piloter les interfaces GPIO de gestion des signaux d'entrée-sortie d'état et de commande, de communiquer avec les boutons-poussoirs de commande au volant, etc.

D'autre part, du fait que les signaux audio sont échangés sous forme numérique entre le boîtier pilote 10 et le boîtier de service 12, la liaison entre ces deux boîtiers est particulièrement robuste aux perturbations extérieures sur l'audio, même avec de faibles diamètres de câble.

## Revendications

1. Un équipement multimedia et de téléphonie mains-libres pour véhicule automobile, comprenant :
a) un boitier pilote (10) comprenant :
• un processeur numérique (18) de traitement de signaux et de contrôle de l'équipement ;
et, couplés à ce processeur :
• un écran (20) d'affichage d'informations ; et
• des moyens pour appliquer des commandes utilisateur,
b) un boitier déporté (12), distinct du boitier pilote, apte à être monté dans le véhicule à distance du boitier pilote, et comprenant :
• un amplificateur audio (52) apte à être relié à un haut-parleur (54) disposé dans l'habitacle du véhicule ; et
• une alimentation de puissance (46), apte à être reliée au réseau de bord (48) du véhicule et à alimenter directement les circuits du boitier déporté, et
c) une liaison (14) de couplage du boitier pilote au boitier déporté,
cet équipement étant **caractérisé en ce que** :
- la liaison de couplage est une liaison filaire, constituée par un bus numérique bidirectionnel apte à véhiculer concurremment des signaux numériques et des courants d'alimentation de puissance ;
- le boitier pilote est un boitier apte à être assujetti de manière amovible à la planche de bord du véhicule à proximité du conducteur ;
- le boitier pilote comprend en outre :
• des moyens (26) de couplage sans fil avec un téléphone distant (28) pour le pilotage à distance des fonctions de ce téléphone ; et
• une interface (32) couplant le processeur au bus numérique de la liaison de couplage ;
- le boitier pilote est dépourvu d'alimentation électrique propre et il est alimenté indirectement par l'alimentation du boitier déporté via le bus numérique ;
- le boitier déporté est dépourvu de circuit microcontrôleur de traitement numérique ; et
- le boitier déporté comprend en outre :
• un codec audio (56) couplant le bus numérique à l'amplificateur audio;
• une connectique (38, 50, 58, 60, 64) de liaison filaire à une pluralité d'organes périphériques (40, 42, 44, 62, 68, 72) de l'équipement ; et
• des moyens de couplage commun de l'ensemble desdits périphériques au boitier pilote via le bus numérique.

2. L'équipement de la revendication 1, dans lequel la liaison de couplage est une liaison de type bus USB.

3. L'équipement de la revendication 2, dans lequel la liaison de couplage comprend un double bus USB.

4. L'équipement de la revendication 1, dans lequel le boîtier déporté comprend en outre un codec audio (66) de couplage du bus numérique à un microphone (62) disposé dans l'habitacle du véhicule.

5. L'équipement de la revendication 1, dans lequel l'équipement comprend en outre :
d) un boîtier de télécommande (16),
les moyens du boîtier pilote pour appliquer des commandes utilisateur comprenant un récepteur (24) de signaux radio émis par le boîtier de télécommande.

6. L'équipement de la revendication 1, dans lequel le boîtier déporté comprend en outre une interface (70) de couplage à des touches de commande disposées sur un volant du véhicule.

7. L'équipement de la revendication 1, dans lequel le boîtier déporté comprend en outre une interface (74) de couplage à un autoradio (72) ou un système audio embarqué du véhicule.

8. L'équipement de la revendication 1, dans lequel le boîtier déporté comprend un répartiteur (36), couplé d'une part au bus numérique et d'autre part à une pluralité de prises (38) aptes à recevoir des périphériques (40, 42, 44) directement connectables au bus numérique.

9. L'équipement de la revendication 1, dans lequel le boîtier pilote comprend en outre, couplé au processeur, un récepteur (30) de signaux GPS de géopositionnement par satellite.

10. L'équipement de la revendication 1, dans lequel :
- l'écran d'affichage (20) est un écran tactile, et
- les moyens du boîtier pilote pour appliquer des commandes utilisateur comprennent des moyens (22) de décodage de contacts appliqués à l'écran tactile par un utilisateur.

## Patentansprüche

1. Multimedia- und Freisprecheinrichtung für Kraftfahrzeug, umfassend:
a) ein Steuergehäuse (10), umfassend:
- einen digitalen Prozessor (18) zur Signalverarbeitung und zur Steuerung der Einrichtung;
und, an diesen Prozessor angekoppelt:
- einen Bildschirm (20) zur Anzeige von Informationen; und
- Mittel zum Anwenden der Benutzerbefehle,
b) ein räumlich abgesetztes Gehäuse (12), das von dem Steuergehäuse verschieden ist und in der Lage ist, in dem Fahrzeug von dem Steuergehäuse beabstandet montiert zu werden; und umfassend
- einen Audioverstärker (52), der in der Lage ist, mit einem Lautsprecher (54), der in der Fahrgastzelle angeordnet ist, verbunden zu werden, und
- eine Leistungsversorgung (46), die in der Lage ist, mit dem Bordnetz (48) des Fahrzeugs verbunden zu werden und die Schaltungen des räumlich abgesetzten Gehäuses direkt zu versorgen, und
c) eine Verbindung (14) zum Ankoppeln des Steuergehäuses an das räumlich abgesetzte Gehäuse,
wobei die Einrichtung **dadurch gekennzeichnet ist, dass**
- die Ankopplungsverbindung eine drahtgebundene Verbindung ist, die von einem bidirektionalen digitalen Bus gebildet ist, der in der Lage ist, digitale Signale und Leistungsversorgungsströme gleichzeitig zu übertragen;
- das Steuergehäuse ein Gehäuse ist, das in der Lage ist, von dem Armaturenbrett des Fahrzeugs lösbar in der Nähe des Fahrers befestigt zu werden;
- das Steuergehäuse ferner Folgendes umfasst:
- Mittel (26) zum drahtlosen Ankoppeln mit einem entfernten Telefon (28) zum Fernsteuern der Funktionen dieses Telefons; und
- eine Schnittstelle (32), die den Prozessor an den digitalen Bus der Ankopplungsverbindung ankoppelt;
- das Steuergehäuse keine eigene elektrische Versorgung hat und es durch die Versorgung des räumlich abgesetzten Gehäuses über den digitalen Bus indirekt versorgt wird;
- das räumlich abgesetzte Gehäuse keine Mikrocontroller-Schaltung zur digitalen Verarbeitung hat; und
- das räumlich abgesetzte Gehäuse ferner Folgendes umfasst:
- einen Audiocodec (56), der den digitalen Bus an den Audioverstärker ankoppelt;
- eine Anschlusstechnik (38, 50, 58, 60, 64) für die drahtgebundene Verbindung mit einer Mehrzahl von Peripherie-Organen (40, 42, 44, 62, 68, 72) der Einrichtung; und
- Mittel zum gemeinsamen Ankoppeln sämtlicher Peripherie-Organe an das Steuergehäuse über den digitalen Bus.

2. Einrichtung nach Anspruch 1, wobei die Ankopplungsverbindung eine Verbindung des USB-Bus-Typs ist.

3. Einrichtung nach Anspruch 2, wobei die Ankopplungsverbindung ein doppelter USB-Bus ist.

4. Einrichtung nach Anspruch 1, wobei das räumlich abgesetzte Gehäuse ferner einen Audiocodec (66) zum Ankoppeln des digitalen Busses an ein Mikrofon (62), das in der Fahrgastzelle des Fahrzeugs angeordnet ist, umfasst.

5. Einrichtung nach Anspruch 1, wobei die Einrichtung ferner Folgendes umfasst:
d) ein Fernsteuergehäuse (16),
wobei die Mittel des Steuergehäuses zur Anwendung der Benutzerbefehle einen Empfänger (24) von Funksignalen, die von dem Fernsteuergehäuse ausgesendet werden, umfassen.

6. Einrichtung nach Anspruch 1, wobei das räumlich abgesetzte Gehäuse ferner eine Schnittstelle (70) zum Ankoppeln an Bedientasten, die an einem Lenkrad des Fahrzeugs angeordnet sind, umfasst.

7. Einrichtung nach Anspruch 1, wobei das räumlich abgesetzte Gehäuse ferner eine Schnittstelle (74) zum Ankoppeln an ein Autoradio (72) oder ein an Bord des Fahrzeugs befindliches Audiosystem umfasst.

8. Einrichtung nach Anspruch 1, wobei das räumlich abgesetzte Gehäuse einen Verteiler (36) umfasst, der einerseits an den digitalen Bus und andererseits an eine Mehrzahl von Steckdosen (38) angekoppelt ist, die in der Lage sind, direkt an den digitalen Bus anschließbare Peripherieorgane (40, 42, 44) aufzunehmen.

9. Einrichtung nach Anspruch 1, wobei das Steuergehäuse ferner, an den Prozessor angekoppelt, einen Empfänger (30) von Navigationssatelliten-System-GPS-Signalen umfasst:

10. Einrichtung nach Anspruch 1, wobei
- der Bildschirm (20) ein berührungsempfindlicher Bildschirm ist, und
- die Mittel des Steuergehäuses zur Anwendung der Benutzerbefehle Mittel (22) zum Decodieren von Berührungen umfassen, die von einem Benutzer auf den Berührungsbildschirm angewendet werden.

## Claims

1. A hands-free phone and multimedia device for automotive vehicle, comprising:
a) a pilot box (10) comprising:
• a digital processor (18) for processing signals and for controlling the device;
and, coupled to this processor:
• a display screen (20) for displaying information; and
• means for applying user commands,
b) an offset box (12), distinct from the pilot box, adapted to be mounted in the vehicle, remote from the pilot box, and comprising:
• an audio amplifier (52) adapted to be connected to a loudspeaker (54) arranged in the passenger compartment of the vehicle; and
• a power supply (46), adapted to be connected to the on-board electrical system (48) of the vehicle and to directly power the circuits of the offset box, and
c) a link (14) for coupling the pilot box to the offset box,
said device being **characterized in that**:
- the coupling link is a wire link, consisted of a bidirectional digital bus adapted to convey concurrently digital signals and power supply currents;
- the pilot box is a box adapted to be removably fastened to the dashboard of the vehicle, near the driver;
- the pilot box further comprises:
• means (26) for wireless coupling to a remote phone (28), for the remote piloting of the functions of this phone; and
• an interface (32) coupling the processor to the digital bus of the coupling link;
- the pilot box have no proper electrical power supply and is indirectly powered by the offset box power supply, via the digital bus;
- the offset box has no digital processing microcontroller circuit; and
- the offset box further comprises:
• an audio codec (56) coupling the digital bus to the audio amplifier;
• a connection system (38, 50, 58, 60, 64) for connecting the wire link to a plurality of peripheral units (40, 42, 44, 62, 68, 72) of the device; and
• means for the common coupling of all said peripheral units to the pilot box via the digital bus.

2. The device of claim 1, wherein the coupling link is a link of the USB bus type.

3. The device of claim 2, wherein the coupling link comprises a double USB bus.

4. The device of claim 1, wherein the offset box further comprises an audio codec (66) for coupling the digital bus to a microphone (62) located in the passenger compartment of the vehicle.

5. The device of claim 1, wherein the device further comprises:
d) a remote-control box (16),
the means of the pilot box for applying user commands comprising a receiver (24) for receiving signals emitted by the remote-control box.

6. The device of claim 1, wherein the offset box further comprises an interface (70) for the coupling to control buttons located on a steering wheel of the vehicle.

7. The device of claim 1, wherein the offset box further comprises an interface (74) for the coupling to a car radio (72) or an in-car audio system of the vehicle.

8. The device of claim 1, wherein the offset box comprises a distribution block (36), coupled on the one hand to the digital bus and on the other hand to a plurality of sockets (38) adapted to receive peripheral units (40, 42, 44) directly connectable to the digital bus.

9. The device of claim 1, wherein the pilot box further comprises, coupled to the processor, a receiver (30) for receiving GPS satellite positioning signals.

10. The device of claim 1, wherein:
- the display screen (20) is a touch screen, and
- the means of the pilot box for applying user commands comprise means (22) for decoding contacts applied to the touch screen by a user.
